# EUROPÄISCHE PATENTSCHRIFT

(11) **EP 4 397 822 B1**
(45) Veröffentlichungstag und Bekanntmachung des Hinweises auf die Patenterteilung: **09.07.2025**
(21) Anmeldenummer: 23216235.4
(22) Anmeldetag: 13.12.2023
(51) Int. Cl.: E04G 21/08, G01N 33/38, G06T 19/00, B28B 17/00, B28B 1/093, G01C 1/00

(54) **BETONAGESYSTEM MIT POSITIONSBESTIMMUNG FÜR INNENRÜTTLER**
CONCRETE STORAGE SYSTEM WITH POSITION DETERMINATION FOR INTERNAL SHAKER
SYSTÈME DE MANUTENTION DE BÉTON AVEC DÉTERMINATION DE POSITION POUR VIBREURS INTERNES

(30) Priorität: 21.12.2022 DE 102022134329
(43) Veröffentlichungstag der Anmeldung: 10.07.2024
(73) Patentinhaber: Wacker Neuson Produktion GmbH & Co. KG, 85084 Reichertshofen (DE)
(72) Erfinder: LANGE, Christian, 85051 Ingolstadt (DE); BERGER, Rudolf, 82031 Grünwald (DE); DILLER, Patrick, 86558 Hohenwart (DE); WEISKOPF, Alto, 85250 Altomünster (DE)
(74) Vertreter: Müller Hoffmann & Partner

(56) Entgegenhaltungen:
- CN-A- 111 305 576
- JP-A- 2019 206 910
- JP-A- 2022 090 859
- JP-B1- 7 012 980

## Beschreibung

Die Erfindung betrifft eine Vorrichtung und ein Verfahren zum Bestimmen der Position einer durch eine Bedienperson führbaren Rütteleinheit zur Betonverdichtung.

Frisch vergossener, noch fließfähiger Beton muss verdichtet werden, um Gaseinschlüsse aus dem Beton zu lösen und Kiesnester zu vergleichmäßigen. Dadurch wird die Qualität und Festigkeit des Betons erhöht. Vielfältige technische Regelwerke enthalten entsprechende Vorgaben für die Betonverdichtung.

Zur Betonverdichtung werden häufig mobile, d.h. tragbare, Innenrüttler (Innenvibratoren) eingesetzt. Derartige Innenrüttler weisen eine Rütteleinheit zum Erzeugen einer Vibration bzw. Schwingung auf, die in den noch fließfähigen Beton eingeleitet wird, um den Beton zu verdichten. Die Rütteleinheit kann z.B. einen Unwuchterreger und einen den Unwuchterreger antreibenden Elektromotor aufweisen, die in einem gemeinsamen Gehäuse, z.B. einer Rüttelflasche, angeordnet sind. Weiterhin kann eine Bedieneinheit, z.B. ein Schaltergehäuse, ein Frequenzumformer oder Ähnliches als Teil des Innenrüttlers vorgesehen sein. Die Rütteleinheit und die Bedieneinheit können durch einen robusten Schutz- und Bedienungsschlauch miteinander verbunden sein. Im Inneren des Schutz- und Bedienungsschlauchs werden die elektrischen Leitungen für den Antrieb in der Rütteleinheit geführt. Eine Bedienperson kann die Rütteleinheit durch Greifen des Schutz- und Bedienungsschlauchs führen und zielgerichtet an den gewünschten Stellen in den zu verdichtenden Beton eintauchen.

Es sind auch Innenrüttler bekannt, bei denen der Elektroantrieb nicht in der Rüttelflasche, sondern außerhalb angeordnet ist. In diesem Fall wird die Drehbewegung des Elektroantriebs über eine biegsame Welle auf den Unwuchterreger in der Rütteleinheit übertragen. Die biegsame Welle kann ebenfalls im Inneren des Schutz- und Bedienungsschlauchs angeordnet sein.

Der Elektroantrieb kann auf einer Baustelle über elektrischen Strom aus einem öffentlichen Netz oder aus einem speziellen Baustellennetz versorgt werden. Mithilfe eines Frequenzumformers kann der über das Netz bezogene Strom in einen hinsichtlich Spannung, Stromart (Wechselstrom) und Frequenz für den Elektroantrieb geeigneten Strom gewandelt werden.

In jüngerer Zeit sind auch Innenrüttler bekannt geworden, die ihre elektrische Energie über einen Akku (elektrischer Energiespeicher) beziehen. Der Akku kann z.B. in einem Rucksack-Tragesystem angeordnet sein, das von einer Bedienperson auf dem Rücken getragen werden kann. In dem Rucksack-Tragesystem kann neben dem Akku auch ein Frequenzumrichter zum Erzeugen des für den Elektroantrieb erforderlichen Stroms, z.B. Drehstroms, angeordnet sein. Das Rucksack-Tragesystem ermöglicht eine hohe Mobilität des Innenrüttlers, ohne dass eine elektrische Verbindung zu einem Netz erforderlich ist. Ein Beispiel für ein derartiges Rucksack-Tragesystem ist in der DE 10 2018 118 552 A1 beschrieben.

Zur Erfüllung technischer Vorschriften kann es erforderlich sein, den Betonageprozess präzise zu dokumentieren. Dabei kann es zweckmäßig sein, dass zur Dokumentation der Betonverdichtung die Qualität bzw. der Fortschritt des jeweiligen Verdichtungsvorgangs (Verdichtungsgrad) sowie auch der Ort der Verdichtung bzw. die möglichst genaue Position des Innenrüttlers während des Verdichtungsvorgangs erfasst werden.

In den nachveröffentlichten Patentanmeldungen DE 10 2022 118 541 A1 und DE 10 2022 118 542 A1 werden Betonverdichtungsvorrichtungen beschrieben, die zum Messen des jeweiligen Verdichtungsfortschritts während der Betonverdichtung dienen. Der jeweilige Ort der Betonverdichtung wird dabei jedoch nicht berücksichtigt.

Aus der CN 111 305 576 A ist ein Innenrüttler bekannt, mit einem Bedienschlauch, an dessen einem Ende ein Gehäuse mit einer Steuerung und an dessen anderem Ende eine Rütteleinheit vorgesehen sind. In dem Gehäuse ist ein 5G Positioniermodul vorgesehen, um die Position des Gehäuses zu ermitteln. In dem Bedienschlauch sowie in der Rütteleinheit sind Sensoren angeordnet, deren Werte für Bestimmung einer Arbeitsposition der Rütteleinheit ausgewertet werden können.

Der Erfindung liegt daher die Aufgabe zugrunde, den Ort einer Betonverdichtung mit größtmöglicher und jedenfalls ausreichender Genauigkeit zu bestimmen. Damit soll die Möglichkeit geschaffen werden, neben der Qualität des jeweiligen Verdichtungsvorgangs auch den Ort der Betonage zu erfassen und zu dokumentieren.

Die Aufgabe wird erfindungsgemäß durch eine Vorrichtung mit den Merkmalen von Anspruch 1 sowie durch ein Verfahren gemäß dem nebengeordneten Anspruch gelöst. Vorteilhafte Ausgestaltungen sind in den abhängigen Ansprüchen angegeben. Zudem wird eine Betonverdichtungsvorrichtung angegeben, in der die erfindungsgemäße Vorrichtung vorteilhaft zum Einsatz kommt.

Es wird eine Vorrichtung zum Bestimmen der Position einer durch eine Bedienperson führbaren Rütteleinheit zur Betonverdichtung angegeben, mit einer Flächen-Positionsbestimmungseinrichtung mit einer Empfangseinrichtung, wobei die Flächen-Positionsbestimmungseinrichtung ausgebildet ist zum Bestimmen der Position der Empfangseinrichtung in der Ebene; mit einer Ausrichtungsbestimmungseinrichtung zum Bestimmen einer Ausrichtung einer Arbeitsrichtung der Bedienperson; und mit einer Korrektureinrichtung zum Korrigieren der Position der Empfangseinrichtung mit einem Offset in Richtung der Ausrichtung der Arbeitsrichtung und damit zum Bestimmen der Position der Rütteleinheit in der Ebene.

Bei der Rütteleinheit kann es sich um eine so genannte Rüttelflasche eines Innenrüttlers handeln, mit einem Gehäuse, in dem ein Unwuchterreger und ein den Unwuchterreger antreibender Elektromotor untergebracht sind. Wie oben dargelegt, kann die Rütteleinheit mit einem Schutz- und Bedienungsschlauch verbunden sein, um es einer Bedienperson zu ermöglichen, die Rütteleinheit in dem zu verdichtenden Beton zu bewegen.

Die Flächen-Positionsbestimmungseinrichtung dient zum Bestimmen der Position bzw. zum Lokalisieren der Empfangseinrichtung. Die Flächen-Positionsbestimmungseinrichtung ist somit in der Lage, den Ort der Empfangseinrichtung in der Fläche bzw. in der Ebene wenigstens also zweidimensional zu bestimmen.

Die Empfangseinrichtung kann bei einer Variante auch Sendefunktionen übernehmen und insoweit als Sende-/Empfangseinrichtung dienen. Auf diese Weise können z.B. Daten, die während eines Betonverdichtungsvorgangs erfasst werden, an externe Datennetze übertragen werden, beispielsweise zur Dokumentation.

Die Empfangseinrichtung ermöglicht eine Positionsbestimmung in der Fläche und kann an der Bedienperson getragen werden. Die ist z.B. möglich in einem Armband, an einem Gürtel, an einem Rucksack, an einem Rucksack-Tragesystem, an einem Akku, der zur Stromversorgung der Rütteleinheit dient, an einem von der Bedienperson gehaltenen Handteil, an dem Schutz- und Bedienungsschlauch oder auch direkt an oder in der Rüttelflasche. Da die Flächen-Positionsbestimmungseinrichtung dazu dient, die Position der Empfangseinrichtung zu bestimmen, ist es sinnvoll, die Empfangseinrichtung nahe an den Ort der Betonverdichtung, also nahe an die Rütteleinheit zu bringen.

Zur Positionsbestimmung sollte ein System mit höchstmöglicher Genauigkeit verwendet werden. Insbesondere muss die Genauigkeit höher sein als bei einem üblichen GPS-System, dessen Genauigkeit im Bereich von einigen Metern in der Regel nicht ausreicht. Vielmehr sollte die Flächen-Positionsbestimmungseinrichtung ein Ortungssystem nutzen, das eine Genauigkeit unterhalb von 1 m, insbesondere unterhalb von 50 cm bzw. unterhalb von 20 cm erlaubt.

Die Ausrichtungsbestimmungseinrichtung soll wenigstens grob die Arbeits- bzw. Blickrichtung der Bedienperson erfassen, unter der Annahme, dass die Bedienperson geradeaus in Richtung der Rütteleinheit schaut und sich nicht im Rücken verdreht. Dabei kann davon ausgegangen werden, dass die Bedienperson in geeigneter Weise die Empfangseinrichtung trägt und in Richtung der Rütteleinheit blickt. Diese Ausrichtung soll, wie nachfolgend erläutert, zur Präzisierung der Positionserkennung der Rütteleinheit genutzt werden, um aus dem präzise erfassten Ort der Empfangseinrichtung Rückschlüsse auf den genauen Ort der Rütteleinheit ziehen zu können.

Die Ausrichtungsbestimmungseinrichtung dient somit zum Bestimmen der räumlichen Ausrichtung des Anwenders. Dazu können geeignete Komponenten genutzt werden, z.B. ein elektronischer Kompass, ein Magnetometer, insbesondere mit mehreren Freiheitsgraden, oder Sensoren zur Bestimmung von Drehraten und Drehbeschleunigungen.

Die Korrektureinrichtung dient zum Korrigieren der durch die Flächen-Positionsbestimmungseinrichtung bestimmten Position der Empfangseinrichtung mit Hilfe eines Offsets, wobei dabei die durch die Ausrichtungsbestimmungseinrichtung bestimmte Ausrichtung der Arbeitsrichtung berücksichtigt wird. Der Offset stellt einen Korrekturwert in Richtung der von der Ausrichtungsbestimmungseinrichtung bestimmten Ausrichtung und damit der Ausrichtung der Bedienperson dar. Auf diese Weise wird mit Hilfe des Offsets berücksichtigt, dass die Rütteleinheit in der Ebene nicht direkt an der Empfangseinrichtung angeordnet ist, sondern ein Stück entfernt. Zum Beispiel kann der Offset etwa der Armlänge einer Bedienperson entsprechen, wenn die Empfangseinrichtung an der Bedienperson getragen wird. Wenn die Empfangseinrichtung in einem Rucksack auf dem Rücken der Bedienperson getragen wird, kann der Offsetwert etwas größer als die Armlänge sein, um die zusätzliche Entfernung zum Rucksack zu berücksichtigen.

Mit Einberechnung des Offsets und der Ausrichtung lässt sich die Position der Rütteleinheit in der Ebene/Fläche, also zweidimensional, mit hoher Genauigkeit bestimmen. Dabei bedeutet die Position der Rütteleinheit in der Ebene quasi "in der Draufsicht", also zweidimensional.

Die Empfangseinrichtung der Flächen-Positionsbestimmungseinrichtung kann derart ausgebildet sein, dass sie von der Bedienperson getragen wird. Wie oben bereits erläutert, kann die Empfangseinrichtung in einem Gehäuse angeordnet sein, das die Bedienperson tragen kann bzw. das an der Bedienperson getragen wird, z.B. mit der Hand, am Gürtel, am Rücken, in einem Rucksack, in einem Kleidungsstück etc.

Die Flächen-Positionsbestimmungseinrichtung kann wenigstens ein Ortungssystem aufweisen, ausgewählt aus der Gruppe RTK (Real Time Kinematic - Echtzeitkinematik), DGPS (Differential Global Positioning System - Differentielles globales Positionierungssystem), UWB (Ultra-wide Band - Ultrabreitband). Derartige Ortungssysteme ermöglichen eine sehr hohe Genauigkeit im Bereich von wenigen Zentimetern in der Horizontalen.

Als Ortungssysteme sind weiterhin Bluetooth-Funkeinrichtungen oder optische Systeme, z.B. mit Bilderkennung möglich.

Zur Erhöhung der Genauigkeit ist es auch möglich, mehrere Ortungssysteme zu kombinieren und daraus Rückschlüsse auf die exakte Position der Empfangseinrichtung zu ziehen.

Die Ausrichtungsbestimmungseinrichtung kann eine Einrichtung aufweisen, ausgewählt der Gruppe Nordsucher, elektronischer Kompass, Magnetometer, Drehbeschleunigungsmesseinrichtung, Gyroskop, inertiale Messeinheit (IMU).

Auch hier besteht die Möglichkeit, zur Erhöhung der Genauigkeit bei der Ausrichtungsbestimmung mehrere Einrichtungen zu kombinieren. Drehbeschleunigungsmesseinrichtung oder Gyros unterliegen bei längeren Einsätzen oder in Kombination mit Vibrationen oftmals einer leichten Drift, die sich z.B. in Kombination mit einem Kompass gut korrigieren lässt. Auch andere Kombinationen können sinnvoll sein.

Es kann eine Tiefen-Positionsbestimmungseinrichtung vorgesehen sein, zum Bestimmen der Position der Rütteleinheit in der Tiefe. Die Tiefe kann dabei insbesondere in Bezug auf die Position der Empfangseinrichtung gemessen werden, also z.B. durch Messen des Abstands zur Empfangseinrichtung. Insbesondere kann dabei die z-Koordinate des Abstands ermittelt werden, um ein Maß für die Tiefe relativ zu der Empfangseinrichtung zu erhalten. Auch andere Messverfahren sind möglich, um die Tiefenposition der Rütteleinheit zu bestimmen.

Auf diese Weise kann zusätzlich zu der oben beschriebenen zweidimensionalen Positionserfassung in der Fläche bzw. Ebene (Flächenposition) auch eine dritte Dimension (Tiefenposition) bestimmt werden. Damit kann die Position der Rütteleinheit dreidimensional bestimmt werden, um auch bei tiefen Betonbauteilen, z.B. Wänden, den Ort der Rütteleinheit zu erfassen.

Die Bestimmung der Tiefe lässt sich somit mit dem Messsystem der Flächen-Positionsbestimmungseinrichtung kombinieren. Dabei kann der Abstand der Rütteleinheit zu der Empfangseinrichtung, also z.B. zu dem Rucksack-Tragesystem, in dem z.B. auch der Akku untergebracht sein kann, oder auch zu einer anderen Positionsmessvorrichtung, ermittelt werden.

An der Rütteleinheit kann sich eine Sendeeinrichtung bzw. eine weitere Sende-/Empfangseinrichtung befinden, mit der der Abstand zu der Empfangseinrichtung der Flächen-Positionsbestimmungseinrichtung am Bediener bzw. am Rucksack gemessen werden kann. Die Messung des Abstandes kann z.B. durch Auswertung der Signalstärke des zwischen den beiden Einheiten ausgetauschten Signals ermittelt werden. Bei einem tieferen Eintauchen der Rütteleinheit erhöht sich der Abstand, so dass die Signalstärke sinkt. Dadurch kann ein Rückschluss auf die Eintauchtiefe gezogen werden.

Die Tiefen-Positionsbestimmungseinrichtung kann insbesondere eine Entfernungsmesseinrichtung aufweisen, zum Messen einer Entfernung zwischen der Rütteleinheit und der Empfangseinrichtung der Flächen-Positionsbestimmungseinrichtung. Die Entfernungsmesseinrichtung kann somit die kurze Entfernung zwischen der Sende-/Empfangseinrichtung an der Rütteleinheit und der Empfangseinrichtung der Flächen-Positionsbestimmungseinrichtung messen. Daraus kann auf die Tiefe bzw. die dritte Dimension in Richtung der z-Achse geschlossen werden.

Die Entfernungsmesseinrichtung kann die Entfernung somit auf der Basis einer Schwächung eines Funksignals bestimmen, das zwischen der Rütteleinheit und der Empfangseinrichtung der Flächen-Positionsbestimmungseinrichtung ausgetauscht wird. Je nach Ausführungsform ist es ausreichend, an der Rütteleinheit eine Sendeeinrichtung vorzusehen, die ein Funksignal abgibt, dessen Stärke durch die Empfangseinrichtung der Flächen-Positionsbestimmungseinrichtung oder einen anderen geeigneten Empfänger bei der Bedienperson gemessen und ausgewertet wird, um Rückschlüsse auf die Entfernung zu ziehen. Bei einer Variante kann die Entfernungsmessung bzw. Bestimmung der Tiefe, insbesondere der Eintauchtiefe in den zu verdichtenden Beton, auch mit Hilfe von barometrischen Sensoren, erfolgen.

Es kann eine Dokumentationsvorrichtung vorgesehen sein, zum Dokumentieren der dreidimensionalen Position der Rütteleinheit auf der Basis der Flächenposition und der Tiefenposition der Rütteleinheit. Damit kann die dreidimensionale Position der Rütteleinheit über die Zeit dokumentiert werden. Insbesondere kann protokolliert werden, wo und wie lange sich die Rütteleinheit aufgehalten hat.

Die Dokumentation kann somit nicht nur zeitlich, sondern auch mit einer dreidimensionalen, also räumlichen Zuordnung erfolgen. Auf diese Weise lassen sich z.B. auch dreidimensionale Heatmaps für Betonbauteile mit größerer Tiefenerstreckung erstellen, um nicht nur eine Verdichtung in der Ebene, sondern auch in der Tiefe, zu erfassen. In diesem Zusammenhang können auch die jeweils an den Verdichtungsorten erreichten Verdichtungsgrade dokumentiert werden.

Die gemessenen Daten können zu diesem Zweck auch an ein Datenübertragungssystem, z.B. ein Mobiltelefon oder ein Gateway, übermittelt werden, um an zentraler Stelle gesammelt und ausgewertet zu werden.

Zudem können die Daten durch Assistenzsysteme genutzt werden, wie nachfolgend erläutert wird.

Es wird ein System zum Führen einer Bedienperson bei einer Betonverdichtung mit einer Betonverdichtungsvorrichtung angegeben, mit einer Planungsvorrichtung zum Speichern von Planungsdaten, wobei die Planungsdaten dienen zum Definieren von Orten in einem definierten Gebiet, an denen eine Betonverdichtung mit der Betonverdichtungsvorrichtung zu erfolgen hat; und mit einer Positionsbestimmungsvorrichtung zum Bestimmen der jeweils aktuellen Position der Betonverdichtungsvorrichtung; und mit einer Anzeigeeinrichtung zum Anzeigen von jeweils demjenigen Ort, an dem aktuell eine Betonverdichtung zu erfolgen hat.

Das System kann als Assistenzsystem eine Bedienperson bei der Betonverdichtung im Rahmen eines Betonagevorgangs unterstützen, indem der Bedienperson Hinweise gegeben werden, an welchem Ort eine jeweilige Betonverdichtung jeweils aktuell erfolgen sollte. Die Verdichtungsorte können insbesondere Orte sein, an denen die Betonverdichtungsvorrichtung in den zu verdichtenden Beton eingetaucht werden soll.

Bei einer Variante kann der Bedienperson auch eine Reihenfolge der Orte der Betonverdichtung vorgegeben werden. Dabei können die Planungsdaten auch zum Definieren einer Reihenfolge der Orte dienen, in der die Betonverdichtung zu erfolgen hat, wobei die Anzeigeeinrichtung ausgebildet sein kann zum Anzeigen von jeweils demjenigen Ort in der Reihenfolge von Orten, an dem aktuell eine Betonverdichtung zu erfolgen hat.

Somit können Orte definiert werden, in denen verdichtet werden soll, wobei mindestens ein Ort angezeigt wird, an dem verdichtet werden soll.

Die Bedienperson kann sich dann während des Betonageprozesses an die vorgegebene Reihenfolge der Verdichtungsorte halten. Diese Vorgabe einer Reihenfolge kann den Vorteil haben, dass damit eine Wegoptimierung verbunden sein kann, damit die Betonage zeit- und kostenoptimiert verrichtet werden kann. Alternativ kann die Bedienperson aber auch davon abweichen und eine eigene Verdichtungsreihenfolge wählen.

Die Bedienperson kann z.B. bei einer Variante eine Art Karte mit Orten, an denen verdichtet werden soll, angezeigt bekommen und diese Orte jedoch nach eigener Auswahl abarbeiten und so zum gewünschten Verdichtungsziel kommen. Falls dabei Orte ausgelassen werden, könnte dies als Verdichtungsfehlstellen angezeigt werden, z.B. in einer "Heatmap". Dadurch kann die Bedienperson erkennen, welche Stellen noch verdichtet werden müssen.

Es ist also möglich, dass je nach Variante oder Betriebsart der Bedienperson jeweils nur ein Verdichtungsort, mehrere Verdichtungsorte (ohne festgelegte Reihenfolge) oder mehrere Verdichtungsorte (mit festgelegter bzw. vorgeschlagener Reihenfolge) angezeigt werden.

Die Positionsbestimmungsvorrichtung kann dabei der oben beschriebenen Vorrichtung zum Bestimmen der Position einer durch eine Bedienperson führbaren Rütteleinheit entsprechen.

Das für die Planungsvorrichtung relevante definierte Gebiet kann z.B. eine (Ober-) Fläche mit zu verdichtendem Beton, z.B. innerhalb einer Schalung sein. Insbesondere kann das definierte Gebiet die Betonoberfläche sein, in die die Bodenverdichtungsvorrichtung eingetaucht werden soll. Dabei kann die Betonoberfläche als Ganzes erfasst oder auch in Teilbereiche aufgeteilt werden, die jeweils als definiertes Gebiet verstanden werden können.

Als Orte können die jeweiligen Eintauchstellen für die Rüttelflasche eines Innenrüttlers verstanden werden. Insbesondere können die Orte innerhalb einer Fläche (z.B. der Betonoberfläche) mit Koordinaten der optimalen Eintauchpunkte versehen werden.

Die Reihenfolge von Orten entspricht der Reihenfolge der Eintauchstellen, an denen nacheinander die Rüttelflasche in den zu verdichtenden Beton eingetaucht und der Beton somit verdichtet werden soll.

Die Anzeigeeinrichtung zeigt dem Bediener an, an welcher Stelle er aktuell eine Betonverdichtung vornehmen soll. Dies ist z.B. möglich durch entsprechende Handlungsanweisungen, z.B. dass der Bediener den Innenrüttler um einen bestimmten Weg nach vorne oder zur Seite bewegen soll. Der Bediener kann diesen Handlungsempfehlungen folgen und somit leicht den Innenrüttler an der durch die Planungsvorrichtung vorgegebenen Stelle in den Beton eintauchen. Der Bediener kann somit auf der Anzeigeeinrichtung sehen, wo er derzeit verdichten soll.

Die Anzeigeeinrichtung kann ein Display aufweisen, auf dem der Bediener den Ort direkt sehen kann oder über das er eine entsprechende Handlungsanweisung erhält, um den Ort zu erreichen. Zum Beispiel kann die Anzeigeeinrichtung ein Smartphone sein, ein Tablet, eine Smartwatch o.ä. Ebenfalls ist es möglich, eine VR-Brille (Virtual Reality) oder eine AR-Brille (Augmented Reality) zu nutzen. Ebenfalls ist die Nutzung eines Head-up Displays möglich.

Die Anzeigeeinrichtung kann ausgebildet sein zum Anzeigen der Position der Betonverdichtungsvorrichtung und/oder zum Anzeigen von wenigstens jeweils demjenigen Ort in der Reihenfolge von Orten, an dem als nächstes eine Betonverdichtung zu erfolgen hat. Die Bedienperson kann somit auf der Anzeigeeinrichtung erkennen, inwieweit die Positionen von Innenrüttler und Eintauchort voneinander abweichen. Damit kann die Bedienperson durch Bewegen des Innenrüttlers leicht die Abweichung verringern und an der vorgesehenen Stelle verdichten. Dabei ist es möglich, nicht nur die aktuell vorgesehene Eintauchstelle, sondern auch die nächste oder auch die weiteren Eintauchstellen anzuzeigen. Damit erkennt die Bedienperson auch die Sinnfälligkeit der von der Planungsvorrichtung vorgegebenen Planungsdaten.

Die Anzeigeeinrichtung kann ausgebildet sein zum Anzeigen des Ortes, an dem aktuell oder als nächstes eine Betonverdichtung zu erfolgen hat, in Relation zu der aktuellen Position der Betonverdichtungsvorrichtung. Dabei kann die aktuelle Position des Innenrüttlers angezeigt werden, in Relation zum aktuellen und/oder zum nächsten Verdichtungsort.

Es kann eine Verdichtungskoordinaten-Vorgabevorrichtung vorgesehen sein zum Erzeugen von Planungsdaten, die in der Planungsvorrichtung speicherbar sind. Die Verdichtungskoordinaten-Vorgabevorrichtung kann separat vorgesehen sein, z.B. in Form eines Laptops oder sogar ortsfern in einem größeren Datennetzwerk. Sie muss nur bedarfsweise mit der Planungsvorrichtung verbunden sein, um die (gegebenenfalls extern) erzeugten Planungsdaten zu übermitteln. Die Planungsdaten können neben den Eintauch- bzw. Verdichtungsorten auch Informationen zur jeweiligen Verdichtungsdauer bzw. zum anzustrebenden Verdichtungsgrad umfassen. Die Parameter Verdichtungsdauer bzw. Verdichtungsgrad geben einen Hinweis darauf, dass der Beton an der entsprechenden Stelle ausreichend verdichtet wurde.

Die Bedienperson erhält somit über die Anzeigeeinrichtung eine Empfehlung für eine geeignete Bewegungsmaßnahme, um die Abweichung zwischen der Eintauchposition bzw. Verdichtungsposition einerseits und der Position der Betonverdichtungsvorrichtung (z.B. der Rüttelflasche) zu verringern. Zum Beispiel kann die Bedienperson den Innenrüttler verlagern oder die Eintauchstelle ändern. Dabei können über die Anzeigeeinrichtung Hinweise, wie z.B. Pfeile, oder Streckenangaben angezeigt werden, wie die Bedienperson den Innenrüttler bewegen soll.

Es kann eine Annäherungserkennungsvorrichtung vorgesehen sein, zum Erkennen eines Zustands, in dem die Abweichung geringer ist als ein vorgegebener Abweichungsgrenzwert und zum Erzeugen eines Bestätigungssignals. Der Abweichungsgrenzwert definiert eine zulässige Abweichung zwischen dem (theoretisch) vorgegebenen "idealen" Eintauchort und dem tatsächlichen Eintauchort, an dem die Rüttelflasche in den zu verdichtenden Beton eingetaucht wird. Wenn der Abweichungsgrenzwert unterschritten wird, kann ein Bestätigungssignal für die Bedienperson erzeugt werden, dass die Rüttelflasche an der korrekten Position eingetaucht wurde.

Die Planungsdaten können außer den Daten zum Definieren der Orte, an denen eine Betonverdichtung zu erfolgen hat, weitere Daten aufweisen, ausgewählt aus der Gruppe: Zeitdauer der Verdichtung an dem betreffenden Ort, Intensität der Verdichtung an dem betreffenden Ort, Schwingungsanzahl der Verdichtung an dem betreffenden Ort. Dadurch kann detailliert festgelegt werden, wie stark an welchem Ort bzw. an welcher Eintauchstelle verdichtet werden soll. Dies kann insbesondere dann interessant sein, wenn das zu verdichtende Betonteil stark unterschiedlich konturiert ist, so dass an verschiedenen Orten unterschiedlich stark bzw. intensiv verdichtet werden muss.

Die beschriebene Positionsbestimmungsvorrichtung kann vorteilhaft bei einer Betonverdichtungsvorrichtung zum Einsatz kommen. Dementsprechend wird eine Betonverdichtungsvorrichtung angegeben, mit einem Innenrüttler, wobei der Innenrüttler aufweist: eine Rütteleinheit zum Erzeugen einer Schwingung für die Betonverdichtung, eine Bedieneinheit, und einen die Rütteleinheit und die Bedieneinheit verbindenden Schutz- und Bedienungsschlauch; und mit der oben beschriebenen Vorrichtung zum Bestimmen der Position der Rütteleinheit des Innenrüttlers.

Die Bedieneinheit kann ein Schalter, z.B. in einem Schaltergehäuse, ein Frequenzumformer, ein Akku oder z.B. auch ein Akku in einem Rucksack-Tragesystem sein.

Es wird ein Verfahren, gemäß Anspruch 13, zum Bestimmen der Position einer durch eine Bedienperson führbaren Rütteleinheit zur Betonverdichtung angegeben, mit den Schritten
- Bestimmen der Position einer an einer Bedienperson angeordneten Empfangseinrichtung in der Ebene;
- Bestimmen einer Ausrichtung einer Arbeitsrichtung der Bedienperson;
- Korrigieren der Position der Empfangseinrichtung mit einem Offset in Richtung der Ausrichtung der Arbeitsrichtung und damit zum Bestimmen der Position einer Rütteleinheit in der Ebene;
- Bestimmen der Position der Rütteleinheit in der Tiefe, ausgehend von der Position der Rütteleinheit in der Ebene oder von der Position der Empfangseinrichtung in der Ebene.

Diese und weitere Merkmale und Vorteile der Erfindung werden nachfolgend anhand von Beispielen unter Zuhilfenahme der begleitenden Figuren näher erläutert. Es zeigen:
- **Fig. 1**: eine schematische Draufsicht auf eine Positionsbestimmungsvorrichtung zum Bestimmen der Position einer durch eine Bedienperson führbaren Rütteleinheit zur Betonverdichtung;
- **Fig. 2**: die Positionsbestimmungsvorrichtung von Fig. 1 in der Seitenansicht;
- **Fig. 3**: die Positionsbestimmungsvorrichtung von Fig. 1 in der Seitenansicht, jedoch mit einem Innenrüttler mit längerem Schutz- und Bedienungsschlauch;
- **Fig. 4**: die Integration der Positionsbestimmungsvorrichtung in einem Assistenzsystem;
- **Fig. 5**: eine Draufsicht auf eine zu betonierende Fläche und ein Verdichtungsvorgang unter Nutzung des Assistenzsystems; und
- **Fig. 6**: eine Anzeigeeinrichtung des Assistenzsystems.

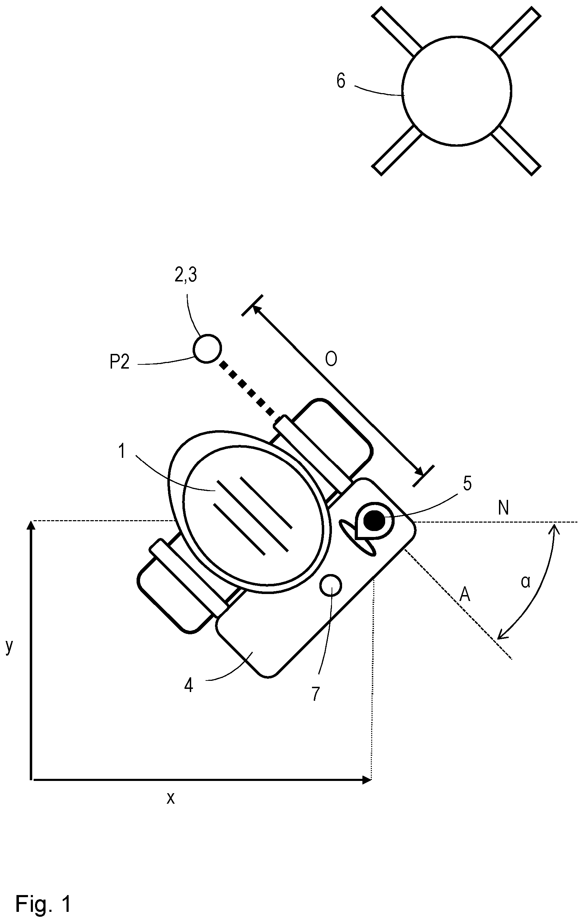

Fig. 1 zeigt eine schematische Draufsicht auf eine Bedienperson 1 (der Schutzhelm der Bedienperson 1 ist in der Draufsicht gut erkennbar), die einen Innenrüttler 2 zur Betonverdichtung führt. Von dem Innenrüttler 2 ist in Fig. 1 lediglich eine Rütteleinheit 3 dargestellt, die häufig auch als Rüttelflasche bezeichnet wird und einen nicht dargestellten Unwuchterreger zum Erzeugen der Verdichtungsvibrationen sowie einen Elektromotor zum Antreiben des Unwuchterregers enthält. Der Aufbau eines derartigen Innenrüttlers 2 ist bekannt und muss daher an dieser Stelle nicht weiter vertieft werden.

Die Rütteleinheit 3 wird vom Bediener in den zu verdichtenden Beton eingetaucht und für eine gewisse Zeit an einem Ort gehalten. Nachfolgend bewegt der Bediener die Rütteleinheit 3 an einen anderen Ort, um die Verdichtung an anderer Stelle fortzusetzen.

Zur Bestimmung des Verdichtungsfortschritts wurden verschiedene Verfahren entwickelt, die der Bedienperson anzeigen bzw. mitteilen, wie weit die Verdichtung an der betreffenden Stelle fortgeschritten ist bzw. ob eine ausreichende Verdichtung erreicht wurde (z.B. in Form eines Verdichtungsgrades). Beispielhaft sei auf die nachveröffentlichten Patentanmeldungen DE 10 2022 118 541 A1 und DE 10 2022 118 542 A1 verwiesen.

Der Innenrüttler 2 ist mit einer Positionsbestimmungsvorrichtung ausgestattet, mit deren Hilfe die Position der Rütteleinheit 3 mit hoher Genauigkeit im dreidimensionalen Raum bestimmt werden kann, wie später erläutert wird.

Der in der Rütteleinheit 3 befindliche Elektromotor wird durch einen nicht dargestellten elektrischen Energiespeicher bzw. Akku gespeist, der vom Bediener in einem Rucksack 4 auf dem Rücken getragen wird. In dem Rucksack 4 können neben dem Akku auch weitere Komponenten angeordnet sein, z.B. ein nicht dargestellter Frequenzumformer, mit dem der aus dem Akku bezogene elektrische Strom in einer für den Elektromotor in der Rütteleinheit 3 geeigneten Weise angepasst werden kann. Insbesondere wird dabei der aus dem Akku bezogene Gleichstrom in einen Wechselstrom bzw. Drehstrom gewandelt und hinsichtlich der Frequenz angepasst.

Weiterhin ist in dem Rucksack 4 ein als Empfangseinrichtung dienender Empfänger 5 angeordnet. Der Empfänger 5 ist derart ausgebildet, dass sein Ort mit hoher bzw. höchstmöglicher Genauigkeit bestimmt werden kann. Dazu können geeignete Ortungsverfahren genutzt werden, z.B. das Verfahren RTK (Real Time Kinematic - Echtzeitkinematik), DGPS (Differential Global Positioning System - Differenzielles globales Positionierungssystem) und/oder UWB (Ultra-Wideband - Ultrabreitband).

In dem in Fig. 1 gezeigten Beispiel erfolgt die Positionsmessung nach dem RTK-Verfahren mithilfe des als RTK-Empfänger ausgebildeten Empfängers 5 in Verbindung mit einer festen Basisstation 6, die auf der Baustelle in der Nähe des Arbeitsorts angeordnet ist.

Bei dem RTK-System können Genauigkeiten von 1 bis 2 cm in der Horizontalen erreicht werden. Die Koordinaten der Punkte werden nach der Initialisierung in Echtzeit berechnet. Die präzisen Positionen werden wie beim DGPS-System relativ zu Referenzstationen mit feststehenden Koordinaten, hier z.B. der Basisstation 6, bestimmt.

Das Ortungssystem zusammen mit dem Empfänger 5 und - soweit vorhanden - der Basisstation 6 bilden eine Flächen-Positionsbestimmungseinrichtung.

Die genaue Position des Empfängers 5 kann z.B. durch Koordinaten x, y in Bezug auf die Basisstation 6 bestimmt werden.

Mithilfe des Rucksacks 4 wird durch die Bedienperson 1 weiterhin eine Ausrichtungsbestimmungseinrichtung 7 getragen. Die Ausrichtungsbestimmungseinrichtung 7 kann auch an einem anderen Ort an der Bedienperson 1 angebracht werden. Sie dient dazu, die Ausrichtung der Bedienperson 1 relativ zu einem feststehenden Koordinatensystem, z.B. relativ zu dem magnetischen Norden, zu bestimmen. Aus der Ausrichtung der Bedienperson 1 kann unmittelbar auf deren Arbeitsrichtung geschlossen werden.

In dem Fig. 1 gezeigten Beispiel ist die gemessene Ausrichtung der Bedienperson 1 mit A gekennzeichnet, die sich gegenüber einer absoluten Ausrichtung, z.B. der Nordrichtung N, um den Winkel α unterscheidet. Mit der Ausrichtung A ist auch die Arbeitsrichtung und die Blickrichtung der Bedienperson 1 verbunden.

Die Ausrichtungsbestimmungseinrichtung 7 kann ein elektronisches Kompassmodul oder ein Magnetometer mit mehreren Freiheitsgraden aufweisen, um die räumliche Ausrichtung A der Bedienperson 1 zu erfassen.

Durch die mit Hilfe des Empfängers 5 und des Ortungssystems erfassten Position der Bedienperson 1 und der durch die Ausrichtungsbestimmungseinrichtung 7 erfassten Ausrichtung A der Bedienperson 1 kann die Position des Innenrüttlers, insbesondere der Rütteleinheit 3, mit hoher Genauigkeit errechnet werden. Dazu wird ein Offset O mit dem entsprechenden Winkel (z.B. α) auf die Position x, y, die für den Ort des Empfängers 5 am Rucksack 4 gemessen wurde, aufgerechnet. Der Offset O kann dabei z.B. die Armlänge der Bedienperson berücksichtigen, wobei auch eine schräge Armhaltung mit eingerechnet werden kann. Zudem kann der Abstand des Empfängers 5 vom Arm der Bedienperson 1 mit eingerechnet werden, der sich im in Fig. 1 gezeigten Beispiel im Rucksack 4 befindet und damit hinter dem Arm der Bedienperson 1.

Auf diese Weise lässt sich die zweidimensionale Position P2 in der Ebene bzw. Fläche und damit die zweidimensionale Position der Rütteleinheit 3 in der in Fig. 1 gezeigten Draufsicht mit hoher Genauigkeit bestimmen.

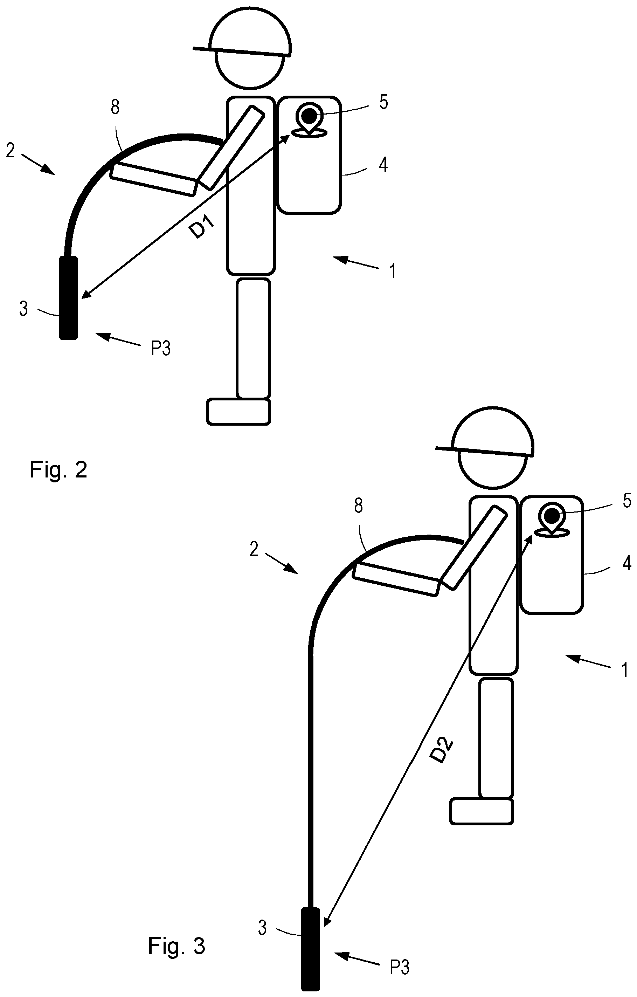

Zusätzlich wird bei der Positionsbestimmungsvorrichtung auch die Tiefe erfasst, sodass die dreidimensionale Position der Rütteleinheit 3 bestimmt werden kann. Dies wird anhand der Figuren 2 und 3 erläutert.

Die Figuren 2 und 3 zeigen die Bedienperson 1 in schematischer Seitenansicht, jeweils mit dem Innenrüttler 2. Der Innenrüttler 2 weist die Rütteleinheit 3 auf, die über einen Schutz- und Bedienungsschlauch 8 gehalten wird. Der Schutz- und Bedienungsschlauch 8 verbindet die Rütteleinheit 3 mit dem Akku im Rucksack 4. Im Inneren des Schutz- und Bedienungsschlauchs 8 verlaufen elektrische Leitungen, über die der Elektromotor in der Rütteleinheit 3 mit elektrischem Strom versorgt werden kann. Zudem ist der Schutz- und Bedienungsschlauch 8 dazu ausgebildet, von der Bedienperson 1 mit den Händen gehalten zu werden, wie in den Figuren 2 und 3 erkennbar. Die Schutz- und Bedienungsschläuche 8 weisen in den Figuren 2 und 3 eine unterschiedliche Länge auf.

Um die Position der Rütteleinheit 3 in der Tiefe zu bestimmen, weist die Positionsbestimmungsvorrichtung ein weiteres Messsystem auf.

Zur Bestimmung der Position der Tiefe der Rütteleinheit 3 ist eine Tiefen-Positionsbestimmungseinrichtung vorgesehen. Dabei wird insbesondere eine Tiefenkoordinate in Bezug auf den Empfänger 5 gemessen. Dies kann z.B. damit erreicht werden, dass der der Abstand der Rütteleinheit 3 zum Empfänger 5 bestimmt wird. In Fig. 2 ist dieser Abstand mit D1, in Fig. 3 mit D2 gekennzeichnet. Aus dem Abstand D1, D2 und den weiteren, bereits oben erläuterten Koordinaten bzw. Abmessungen lässt sich eine Tiefenkoordinate in z-Richtung ableiten, die den relativen Höhenunterschied (Tiefe) der Rütteleinheit 3 zum Empfänger 5 bemisst.

Die Erfassung der Tiefe und damit der dritten Dimension der Position der Rütteleinheit 3 erlaubt es, die Position auch bei tiefen Betonteilen, z.B. Wänden, dreidimensional und damit mit hoher Genauigkeit zu erfassen.

Dazu wird der Abstand der Rütteleinheit 2 zum Empfänger 5 oder auch zu einer weiteren Sende- / Empfangsvorrichtung gemessen. Die weitere Sende-/Empfangseinrichtung kann in geeigneter Weise vom Bediener getragen werden und z.B. ebenfalls in dem Rucksack 4 untergebracht werden.

Die Bestimmung des Abstandes zwischen Innenrüttler und Empfänger 5 und bzw. der weiteren, nicht dargestellten Sende-/Empfangsvorrichtung kann durch Auswertung der Signalstärke eines zwischen den Komponenten ausgetauschten Funksignals gemessen werden.

Bei tieferem Eintauchen der Rütteleinheit 3 in den zu verdichtenden Beton erhöht sich die Distanz D1, D2, sodass die Signalstärke sinkt. Dadurch kann ein Rückschluss auf die Eintauchtiefe erfolgen.

Die somit ermittelte Position der Rütteleinheit 3 kann beispielsweise an ein Mobilgerät oder entsprechendes Gateway gesendet werden und darüber für die Dokumentation des Betonagevorgangs erfasst werden.

Mit dem System wird die Möglichkeit geschaffen, eine Betonage vollständig zu dokumentieren und dabei die ermittelten Verdichtungsgrade nicht nur allgemein örtlich in der Fläche, sondern auch räumlich zuzuordnen. Zur Dokumentation können so genannte Heatmaps erstellt werden, die bei tieferen Bauteilen auch dreidimensional sein können.

Zudem stellt die präzise Erfassung des jeweiligen Ortes der Rütteleinheit 3 während des Betonagevorgangs, in Verbindung mit dem jeweiligen Verdichtungsgrad, eine Grundlage für Assistenzsysteme dar, die die Bedienperson 1 führen können. Insbesondere kann der Bedienperson 1 angezeigt werden, an welchen Stellen die Rütteleinheit 3 des Innenrüttlers 2 noch eingetaucht werden muss, um eine vollständige Verdichtung einer Betonage zu gewährleisten.

Ein Beispiel für ein derartiges Assistenzsystem wird nachfolgend erläutert.

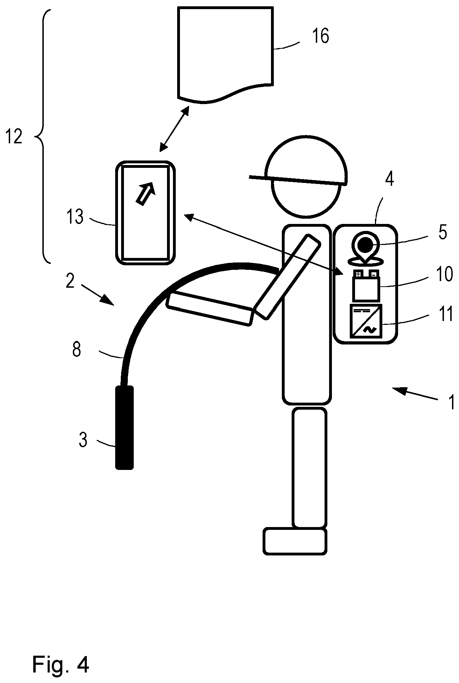

Fig. 4 zeigt die Bedienperson 1 mit dem Innenrüttler 2. Zusätzlich ist exemplarisch dargestellt, dass in dem Rucksack 4 neben dem Empfänger 5 ein als elektrischer Energiespeicher dienender Akku 10 und ein Frequenzumformer 11 zur Energieversorgung des Elektromotors im Innenrüttler 2 angeordnet sind.

Weiterhin ist ein Assistenzsystem 12 vorgesehen, zum Führen der Bedienperson 1 bei der Betonverdichtung. Das Assistenzsystem 12 kann eine oder mehrere Komponenten aufweisen, die insbesondere zur Planung der Position und Reihenfolge der Verdichtungsorte, zur Positionsbestimmung der aktuellen Position der Rütteleinheit 3 und zum Anzeigen des jeweils aktuellen Verdichtungsorts, an dem die Bedienperson 1 die Rütteleinheit 3 positionieren soll, dienen.

Als Teil des Assistenzsystems ist eine Anzeige 13 vorgesehen, auf der der Bedienperson 1 angezeigt wird, wohin sie die Rütteleinheit 3 des Innenrüttlers 2 bewegen soll, um die Rütteleinheit 3 an einer von dem Assistenzsystem 12 vorgegebenen Stelle (Eintauchort) positionieren und eintauchen zu können.

Zu diesem Zweck ist es mit Hilfe des Assistenzsystems 12 möglich, vorab Planungsdaten zu erstellen, an welchen Orten einer Betonoberfläche der noch fließfähige Beton verdichtet werden soll. Gleichzeitig kann die Reihenfolge der Verdichtungsorte festgelegt werden.

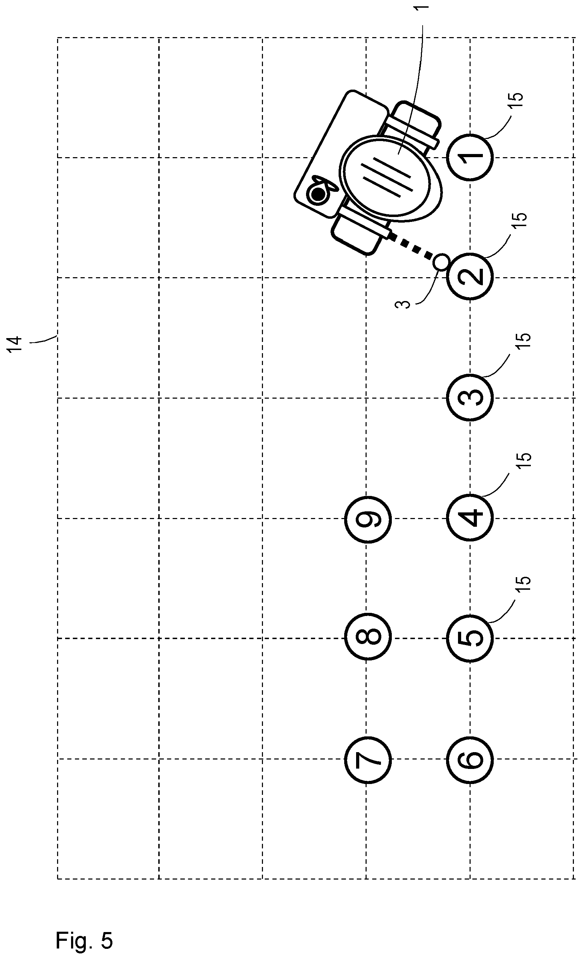

Fig. 5 zeigt in der Draufsicht ein Beispiel für die Betonage einer Fläche, z.B. eines Hallenbodens.

In dem Assistenzsystem 12 ist ein definiertes Gebiet 14 hinterlegt, das der Gesamtfläche des zu betonierenden Hallenbodens oder aber auch nur einer Teilfläche des Hallenbodens entsprechen kann.

Das definierte Gebiet 14 ist untergliedert in Verdichtungsorten 15, an denen mit Hilfe des Innenrüttlers 2 verdichtet werden soll. In dem gezeigten Beispiel sind die Verdichtungsorte 15 durchnummeriert mit 1, 2, 3, ..., 9. Auch die weiteren Bereiche des definierten Gebiets 14 können auf diese Weise als Verdichtungsorte 15 definiert werden.

In dem in Fig. 5 gezeigten Beispiel ist das definierte Gebiet 14 durch eine Gitterstruktur aufgeteilt und in die Verdichtungsorte 15 definiert. Selbstverständlich können die Verdichtungsorte 15 auch anders platziert oder sortiert werden.

Die Vorgabe des definierten Gebiets 14 und der Verdichtungsorte 15 kann extern, d.h. außerhalb vom Innenrüttler 2 erfolgen. Insbesondere kann diese Arbeit auch über ein Netzwerk oder mit Hilfe eines Laptops eingespielt werden. Die Vorgabe der Verdichtungsorte 15 kann von einem Experten vorgenommen werden, der vertieftere Kenntnis über die Betonverdichtung besitzt als die Bedienperson 1. Die Bedienperson 1 muss damit lediglich die Verdichtungsorte 15 nacheinander abfragen.

Zur Dokumentation der von einem Experten vorgenommenen Vorgabe oder auch zur automatischen Erarbeitung einer geeigneten Vorgabe der Verdichtungsorte 15 sowie deren Reihenfolge kann auch eine Verdichtungskoordinaten-Vorgabevorrichtung vorgesehen sein, die ein Planungssystem bildet, mit dem die Planungsdaten vorab erarbeitet werden können.

Zur Orientierung kann der Bedienperson 1 über die Anzeige 13 eine entsprechende Information vermittelt werden, wo aktuell der nächste Verdichtungsort 15 zu finden ist und wo die Bedienperson 1 dementsprechend die Rütteleinheit 3 eintauchen soll.

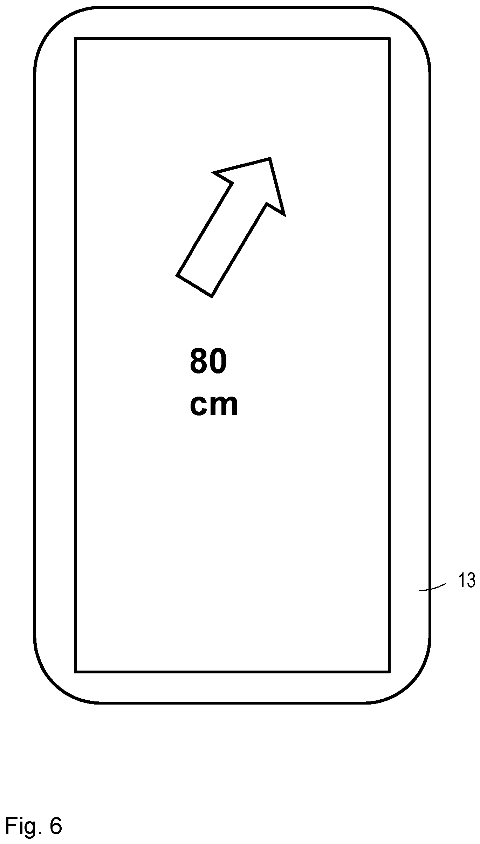

Fig. 6 zeigt beispielhaft ein als Anzeige 13 dienendes Smartphone, auf dem die Bedienperson 1 mit Hilfe eines Pfeils und einer Entfernungsangabe (hier: 80 cm) angezeigt wird, in welche Richtung und inwieweit sie die Rütteleinheit 3 noch bewegen muss, bevor die Rütteleinheit 3 die vorgegebene Position erreicht hat und in den zu verdichtenden Beton eintauchen kann.

Die Anzeige 13 ist nur exemplarisch dargestellt. Insbesondere muss die Anzeige 13 nicht in einem Smartphone oder Tablet untergebracht sein. Bei einer Variante ist es z.B. möglich, die Anzeige 13 in eine AR-Brille (Augmented Reality) zu integrieren und dem Bediener auf diese Weise direkt die Verdichtungsorte 15 anzuzeigen, die er nacheinander abarbeiten soll. Bei der Visualisierung der optimalen Verdichtungspunkte mit Hilfe einer AR-Brille können die Verdichtungspunkte den Bediener daher direkt auf der zu verdichtenden Betonoberfläche angezeigt werden.

Die Verdichtungsorte 15 können insoweit als optimale Verdichtungspunkte verstanden werden, die von dem Planungssystem vorab vorgegeben werden.

Beim Arbeitsbetrieb greift das Assistenzsystem 12 auf die jeweiligen Planungsdaten zurück und vergleicht diese mit der aktuellen Position der Bedienperson 1 bzw. des Innenrüttlers 2. Mit besonderer Genauigkeit kann dabei die Rütteleinheit 3 berücksichtigt werden.

Wenn sich die Bedienperson 1 an der optimalen Position oder in hinreichender Nähe befindet, erhält sie eine entsprechende Rückmeldung, z.B. über die Anzeige 13 und kann den Innenrüttler 2 eintauchen.

Wenn der Verdichtungsvorgang abgeschlossen ist, kann bei entsprechender Ausgestaltung des Assistenzsystems 12 die Bedienperson 1 eine Rückmeldung erhalten, dass ausreichend verdichtet wurde. Diese Rückmeldung kann z.B. taktil erfolgen, z.B. durch einen Ruck im Schutz- und Bedienungsschlauch 8. Alternativ oder ergänzend können auch akustische und/oder optische Signale erzeugt werden, die der Bedienperson 1 anzeigen, dass ausreichend verdichtet wurde.

Anschließend wird der Bedienperson 1 über die Anzeige 13 die Richtung und die Entfernung zum nächsten Verdichtungsort 15 angezeigt.

Während der Betonage kann somit auf der Anzeige 13 dokumentiert werden, ob an allen geplanten Punkten (Verdichtungsorte 15) oder in hinreichender Nähe dazu ausreichend verdichtet wurde. Wenn die Anzeige 13 Teil eines Mobilgeräts ist, z.B. eines Smartphones oder eines Tablets, können die Daten an ein weiteres Netzwerk 16 gesendet werden. Das Netzwerk 16 ist aber nicht zwingender Bestandteil des Assistenzsystems 12.

Bei einer Variante ist es möglich, dass eine gewisse Zeitdauer zu laufen beginnt, wenn der Bediener an einer Stelle verdichtet hat. Nach Ablauf einer vorgegebenen Zeitdauer wird dem Bediener angezeigt, dass der Beton an dieser Stelle auszuhärten beginnt und keine Verdichtung mehr möglich ist.

Bei einer anderen Weiterentwicklung kann der Bediener innerhalb dieser Zeitdauer aufgefordert werden, an dieser Stelle nochmals zu verdichten, wenn die Verdichtung an dieser Stelle nicht ausreichend war. Damit kann erreicht werden, dass der Beton noch vor seinem Aushärten verdichtet wird.

## Patentansprüche

1. Vorrichtung zum Bestimmen der Position einer durch eine Bedienperson (1) führbaren Rütteleinheit (3) zur Betonverdichtung, mit
- einer Flächen-Positionsbestimmungseinrichtung mit einer Empfangseinrichtung (5), wobei die Flächen-Positionsbestimmungseinrichtung ausgebildet ist zum Bestimmen der Position der Empfangseinrichtung (5) in der Ebene;
- einer Ausrichtungsbestimmungseinrichtung (7) zum Bestimmen einer Ausrichtung (A) einer Arbeitsrichtung der Bedienperson (1); und mit
- einer Korrektureinrichtung zum Korrigieren der Position der Empfangseinrichtung (5) mit einem Offset (O) in Richtung der Ausrichtung (A) der Arbeitsrichtung und damit zum Bestimmen der Position (P2) der Rütteleinheit (3) in der Ebene;
**dadurch gekennzeichnet, dass**
- die Empfangseinrichtung (5) der Flächen-Positionsbestimmungseinrichtung derart ausgebildet ist, dass sie von der Bedienperson (1) getragen wird.

2. Vorrichtung nach Anspruch 1, wobei die Flächen-Positionsbestimmungseinrichtung wenigstens ein Ortungssystem aufweist, ausgewählt aus der Gruppe RTK (Real Time Kinematic - Echtzeitkinematik), DGPS (Differential Global Positioning System - Differentielles Globales Positionierungssystem), UWB (Ultra-wideband - UltraBreitband), Bluetooth-Funkeinrichtungen, optische Systeme mit Bilderkennung.

3. Vorrichtung nach einem der vorstehenden Ansprüche, wobei die Ausrichtungsbestimmungseinrichtung eine Einrichtung (7) aufweist, ausgewählt aus der Gruppe Nordsucher, elektronischer Kompass, Magnetometer, Drehbeschleunigungsmesseinrichtung, Gyroskop, inertiale Messeinheit (IMU).

4. Vorrichtung nach einem der vorstehenden Ansprüche, mit einer Tiefen-Positionsbestimmungseinrichtung zum Bestimmen der Position der Rütteleinheit (3) in der Tiefe.

5. Vorrichtung nach Anspruch 4, wobei die Tiefen-Positionsbestimmungseinrichtung eine Entfernungsmesseinrichtung aufweist, zum Messen einer Entfernung zwischen der Rütteleinheit (3) und der Empfangseinrichtung (5) der Flächen-Positionsbestimmungseinrichtung.

6. Vorrichtung nach Anspruch 5, wobei die Entfernungsmesseinrichtung die Entfernung auf der Basis einer Schwächung eines Funksignals bestimmt, das zwischen der Rütteleinheit (3) und der Empfangseinrichtung (5) der Flächen-Positionsbestimmungseinrichtung ausgetauscht wird.

7. Vorrichtung nach einem der Ansprüche 6, 7, wobei eine Dokumentationsvorrichtung vorgesehen ist, zum Dokumentieren einer dreidimensionalen Position (P3) der Rütteleinheit (3) auf der Basis der Flächenposition und der Tiefenposition der Rütteleinheit (3).

8. Assistenzsystem zum Führen einer Bedienperson (1) bei einer Betonverdichtung mit einer Betonverdichtungsvorrichtung (2), mit
- einer Planungsvorrichtung zum Speichern von Planungsdaten, wobei die Planungsdaten dienen zum Definieren von Orten (15) in einem definierten Gebiet (14), an denen eine Betonverdichtung mit der Betonverdichtungsvorrichtung zu erfolgen hat;
- einer als Positionsbestimmungsvorrichtung dienenden Vorrichtung nach einem der vorstehenden Ansprüche zum Bestimmen der jeweils aktuellen Position der Betonverdichtungsvorrichtung (2); und mit
- einer Anzeigeeinrichtung (13) zum Anzeigen von wenigstens jeweils dem Ort (15), an dem aktuell eine Betonverdichtung zu erfolgen hat.

9. Assistenzsystem nach Anspruch 8, wobei die Anzeigeeinrichtung (13) ausgebildet ist zum Anzeigen der Position der Betonverdichtungsvorrichtung (2) und/oder zum Anzeigen von wenigstens jeweils dem Ort (15) in der Reihenfolge von Orten, an dem als nächstes eine Betonverdichtung zu erfolgen hat.

10. Assistenzsystem nach Anspruch 8 oder 9, wobei die Anzeigeeinrichtung (13) ausgebildet ist zum Anzeigen des Ortes (15), an dem aktuell oder als nächstes eine Betonverdichtung zu erfolgen hat, in Relation zu der aktuellen Position der Betonverdichtungsvorrichtung (2).

11. Assistenzsystem nach einem der Ansprüche 8 bis 10, wobei eine Verdichtungskoordinaten-Vorgabevorrichtung vorgesehen ist, zum Erzeugen von Planungsdaten, die in der Planungsvorrichtung speicherbar sind.

12. Betonverdichtungsvorrichtung, mit
- einem Innenrüttler, wobei der Innenrüttler aufweist:
+ eine Rütteleinheit zum Erzeugen einer Schwingung für die Betonverdichtung;
+ eine Bedieneinheit; und
+ einen die Rütteleinheit und die Bedieneinheit verbindendenden Schutz- und Bedienungsschlauch; und mit
- einer Vorrichtung nach einem der Ansprüche 1 bis 7, zum Bestimmen der Position der Rütteleinheit des Innenrüttlers.

13. Verfahren zum Bestimmen der Position einer durch eine Bedienperson führbaren Rütteleinheit zur Betonverdichtung unter Verwendung einer Vorrichtung nach einem der Ansprüche 1 bis 7, mit den Schritten
- Bestimmen der Position einer an einer Bedienperson angeordneten Empfangseinrichtung in der Ebene;
- Bestimmen einer Ausrichtung einer Arbeitsrichtung der Bedienperson;
- Korrigieren der Position der Empfangseinrichtung mit einem Offset in Richtung der Ausrichtung der Arbeitsrichtung und damit zum Bestimmen der Position einer Rütteleinheit in der Ebene;
- Bestimmen der Position der Rütteleinheit in der Tiefe, ausgehend von der Position der Rütteleinheit in der Ebene oder von der Position der Empfangseinrichtung in der Ebene.

## Claims

1. Apparatus for determining the position of a vibration unit (3) for concrete compaction which can be guided by an operator (1), comprising:
- a surface position determination device having a receiving device (5), wherein the surface position determination device is designed to determine the position of the receiving device (5) in the plane;
- an orientation determination device (7) for determining an orientation (A) of a working direction of the operator (1); and
- a correction device for correcting the position of the receiving device (5) with an offset (O) in the direction of the orientation (A) of the working direction and thus for determining the position (P2) of the vibration unit (3) in the plane; **characterised in that**
- the receiving device (5) of the surface position determination device is designed such that it is carried by the operator (1).

2. Apparatus as claimed in claim 1, wherein the surface position determination device has at least one positioning system selected from the group of RTK (Real Time Kinematic), DGPS (Differential Global Positioning System), UWB (Ultra-wideband), Bluetooth radio devices, optical systems with image recognition.

3. Apparatus as claimed in any one of the preceding claims, wherein the orientation determination device has a device (7) selected from the group of a north seeker, electronic compass, magnetometer, rotational acceleration measurement device, gyroscope, inertial measurement unit (IMU).

4. Apparatus as claimed in any one of the preceding claims, comprising a depth position determination device for determining the position of the vibration unit (3) in terms of depth.

5. Apparatus as claimed in claim 4, wherein the depth position determination device has a distance measurement device for measuring a distance between the vibration unit (3) and the receiving device (5) of the surface position determination device.

6. Apparatus as claimed in claim 5, wherein the distance measurement device determines the distance on the basis of an attenuation of a radio signal which is exchanged between the vibration unit (3) and the receiving device (5) of the surface position determination device.

7. Apparatus as claimed in any one of claims 6, 7, wherein a documentation apparatus is provided for documenting a three-dimensional position (P3) of the vibration unit (3) on the basis of the surface position and the depth position of the vibration unit (3).

8. Assistance system for guiding an operator (1) during concrete compaction with a concrete compaction apparatus (2), comprising
- a planning apparatus for storing planning data, wherein the planning data are used to define locations (15) in a defined region (14), at which concrete compaction is to be performed with the concrete compaction apparatus;
- an apparatus, used as a position determination apparatus, as claimed in any one of the preceding claims for determining the respectively current position of the concrete compaction apparatus (2); and comprising
- a display device (13) for displaying at least the respective location (15), at which concrete compaction is currently to be performed.

9. Assistance system as claimed in claim 8, wherein the display device (13) is designed to display the position of the concrete compaction apparatus (2) and/or to display at least the respective location (15) in the order of locations, at which concrete compaction is to be performed next.

10. Assistance system as claimed in claim 8 or 9, wherein the display device (13) is designed to display the location (15), at which concrete compaction is to be performed currently or next, in relation to the current position of the concrete compaction apparatus (2).

11. Assistance system as claimed in any one of claims 8 to 10, wherein a compaction coordinate specification apparatus is provided for generating planning data which can be stored in the planning apparatus.

12. Concrete compaction apparatus, comprising
- an internal vibrator, wherein the internal vibrator has:
+ a vibration unit for generating a vibration for concrete compaction;
+ an operating unit; and
+ a protective and operating hose connecting the vibration unit and the operating unit; and comprising
- an apparatus as claimed in any one of claims 1 to 7 for determining the position of the vibration unit of the internal vibrator.

13. Method for determining the position of an operator-guidable vibration unit for concrete compaction using an apparatus as claimed in any one of claims 1 to 7, comprising the steps of
- determining the position of a receiving device, which is arranged on an operator, in the plane;
- determining an orientation of a working direction of the operator;
- correcting the position of the receiving device with an offset in a direction of the orientation of the working direction and thus for determining the position of a vibration unit in the plane;
- determining the position of the vibration unit in terms of depth, starting from the position of the vibration unit in the plane or from the position of the receiving device in the plane.

## Revendications

1. Dispositif pour déterminer la position d'une unité de vibration (3) destinée au compactage du béton et pouvant être guidée par un opérateur (1), comprenant un dispositif de détermination de la position de surface avec un dispositif de réception (5), le dispositif de détermination de la position de surface étant conçu pour déterminer la position du dispositif de réception (5) dans le plan ;
un dispositif de détermination de l'orientation (7) pour déterminer une orientation (A) d'une direction de travail de l'opérateur (1) ; et
un dispositif de correction pour corriger la position du dispositif de réception (5) avec un décalage (O) dans la direction de l'orientation (A) de la direction de travail et ainsi pour déterminer la position (P2) de l'unité de vibration (3), dans le plan ;
**caractérisé en ce que**
le dispositif de réception (5) du dispositif de détermination de la position de surface est conçu de telle sorte qu'il soit porté par l'opérateur (1).

2. Dispositif selon la revendication 1, dans lequel le dispositif de détermination de la position de surface comprend au moins un système de localisation choisi parmi le groupe RTK (Real Time Kinematic - cinématique en temps réel), DGPS (Differential Global Positioning System - système de positionnement global différentiel), UWB (ultra-wideband - ultra large bande), dispositifs radio Bluetooth, systèmes optiques avec reconnaissance d'images.

3. Dispositif selon l'une des revendications précédentes, dans lequel le dispositif de détermination de l'orientation comprend un dispositif (7) choisi parmi le groupe comprenant un viseur nord, une boussole électronique, un magnétomètre, un dispositif de mesure de l'accélération angulaire, un gyroscope, une unité de mesure inertielle (IMU).

4. Dispositif selon l'une des revendications précédentes, avec un dispositif de détermination de la position en profondeur pour déterminer la position de l'unité de vibration (3) en profondeur.

5. Dispositif selon la revendication 4, dans lequel le dispositif de détermination de la position en profondeur comprend un dispositif de mesure de la distance pour mesurer une distance entre l'unité de vibration (3) et le dispositif de réception (5) du dispositif de détermination de la position de surface.

6. Dispositif selon la revendication 5, le dispositif de mesure de la distance déterminant la distance sur la base d'un affaiblissement d'un signal radio qui est échangé entre l'unité de vibration (3) et le dispositif de réception (5) du dispositif de détermination de la position de surface.

7. Dispositif selon l'une des revendications 6 et 7, dans lequel un dispositif de documentation est prévu pour documenter une position tridimensionnelle (P3) de l'unité de vibration sur la base de la position de surface et de la position en profondeur de l'unité de vibration (3).

8. Système d'assistance pour guider un opérateur (1) lors du compactage du béton avec un dispositif de compactage du béton (2), comprenant
- un dispositif de planification pour stocker des données de planification, les données de planification servant à définir des emplacements (15) dans une zone définie (14) où le compactage du béton doit être effectué avec le dispositif de compactage du béton ;
- un dispositif servant de dispositif de détermination de la position selon l'une des revendications précédentes pour déterminer la position actuelle du dispositif de compactage du béton (2) ; et comprenant
- un dispositif d'affichage (13) pour afficher au moins l'emplacement (15) où le compactage du béton doit avoir lieu.

9. Système d'assistance selon la revendication 8, dans lequel le dispositif d'affichage (13) est conçu pour afficher la position du dispositif de compactage du béton (2) et/ou pour afficher au moins l'emplacement (15) dans l'ordre des emplacements où le compactage du béton doit avoir lieu prochainement.

10. Système d'assistance selon la revendication 8 ou 9, le dispositif d'affichage (13) étant conçu pour afficher l'emplacement (15) où un compactage de béton doit avoir lieu actuellement ou prochainement, par rapport à la position actuelle du dispositif de compactage de béton (2).

11. Système d'assistance selon l'une des revendications 8 à 10, dans lequel il est prévu un dispositif de spécification de coordonnées de compactage pour générer des données de planification qui peuvent être stockées dans le dispositif de planification.

12. Dispositif de compactage du béton, avec un vibrateur interne, le vibrateur interne comprenant :
+ une unité de vibration pour générer une vibration pour le compactage du béton ;
+ une unité de commande ; et
+ un tuyau de protection et de commande reliant l'unité de vibration à l'unité de commande ; et
- un dispositif selon l'une des revendications 1 à 7, pour déterminer la position de l'unité de vibration du vibrateur interne.

13. Procédé pour déterminer la position d'une unité de vibration destinée à compacter le béton et pouvant être guidée par un opérateur, en utilisant un dispositif selon l'une des revendications 1 à 7, comprenant les étapes consistant à
- déterminer la position dans le plan d'un dispositif de réception disposé sur un opérateur ;
- déterminer l'orientation de la direction de travail de l'opérateur ;
- corriger la position du dispositif de réception avec un décalage dans le sens de l'orientation de la direction de travail et ainsi déterminer la position d'une unité de vibration dans le plan ;
- déterminer la position de l'unité de vibration en profondeur, en partant de la position de l'unité de vibration dans le plan ou de la position du dispositif de réception dans le plan.
